Europäisches Patentamt

European Patent Office

Office européen des brevets

(19)

(11) Veröffentlichungsnummer: **0 007 073**
**A1**

(12)

# EUROPÄISCHE PATENTANMELDUNG

(21) Anmeldenummer: **79102293.2**

(22) Anmeldetag: **05.07.79**

(51) Int. Cl.³: **H 01 G 1/10**

(30) Priorität: **13.07.78 DE 2830893**

(43) Veröffentlichungstag der Anmeldung:
**23.01.80 Patentblatt 80/2**

(84) Benannte Vertragsstaaten:
**FR GB IT SE**

(71) Anmelder: **SIEMENS AKTIENGESELLSCHAFT Berlin und München**
**Postfach 261**
**D-8000 München 22(DE)**

(72) Erfinder: **Utner, Ferdinand**
**Roter Brachweg 99**
**D-8400 Regensburg(DE)**

(54) **Verfahren zum Umhüllen von elektrischen Bauelementen, insbesondere Kondensatoren, durch Wirbelsintern.**

(57) Während des Umhüllvorganges im Wirbelbad sind die Anschlußdrähte (2) der Bauelemente (1) zur Vermeidung sog. "Hosen" aus Kunststoff bis unmittelbar an die Bauelemente (1) heran abgedeckt. Nach dem Durchlaufen des Wirbelbades werden die Anschlußdrähte (2) aus der Abdeckung (3) um einen kleinen Betrag herausgehoben. Dadurch wird eine sauber berandete Umhüllung der Bauelemente ohne Bildung von "Hosen" erreicht.
(Fig. 2)

FIG 2

EP 0 007 073 A1

SIEMENS AKTIENGESELLSCHAFT

Berlin und München

Unser Zeichen

VPA 78 P 1 1 1 8 EUR

### Verfahren zum Umhüllen von elektrischen Bauelementen, insbesondere Kondensatoren, durch Wirbelsintern

Die vorliegende Erfindung betrifft ein Verfahren zum Umhüllen von elektrischen Bauelementen, insbesondere elektrischen Kondensatoren, durch Wirbelsintern, bei dem die Metallteile der elektrischen Bauelemente durch ein HF-Feld erwärmt werden, während die Bauelemente in einem Wirbelbad durch aufgewirbeltes Kunststoffpulver geführt werden, bei dem nach dem Durchlaufen des Wirbelbades lose anhaftender Kunststoff entfernt wird und bei dem der angeschmolzene Kunststoff durch einen weiteren Schmelzvorgang geglättet wird.

Ein derartiges Verfahren ist aus der DE-OS 22 43 203 bekannt. Dort werden die Bauelemente zunächst mit einer metallisierten Kunststoffolie umhüllt und dann durch Wirbelsintern isoliert. Aus der DE-AS 25 20 130 ist es bekannt, das nackte Bauelement durch ein Wirbelbad zu führen. Bei diesen bekannten Verfahren ist eine vollständige Umhüllung der Bauelemente nur gewährleistet, wenn das Kunststoffpulver an alle Teile der zu schützenden Flächen herantreten kann. Dadurch bedingt dürfen die zu schützenden Flächen nicht mit Greifern oder Haltevorrichtungen in Berührung stehen oder durch diese Vorrichtungen abgedeckt sein. Gemäß dem Stand der Technik werden auch die Anschlußdrähte umhüllt, da sie ebenfalls durch die Hochfrequenz aufgeheizt werden. Sie müssen nachträglich von der Umhüllung befreit werden.

Die Aufgabe, die der vorliegenden Erfindung zugrundeliegt, besteht bei einem Verfahren der eingangs genannten Art darin, die Beschichtung der Anschlußdrähte beim Wirbelsintern vollständig, d.h. ohne eine sogenannte "Hosenbildung" zu vermeiden. Unter "Hosenbildung" wird eine Beschichtung der Anschlußdrähte in unmittelbarer Nachbarschaft des Bauelementes verstanden. Sie entsteht nach dem Verfahren gemäß dem Stand der Technik, da das Entfernen der unerwünschten Wirbelsinterschicht von den Anschlußdrähten nicht bis unmittelbar an das Bauelement heran durchgeführt werden kann, ohne das Bauelement bzw. seine Umhüllung selbst zu beschädigen.

Die Aufgabe wird gemäß der Erfindung dadurch gelöst, daß die Anschlußdrähte vor dem Eintritt in das Wirbelbad zumindest in ihrem an das Bauelement angrenzenden Teil mit einer wärmeisolierenden und sich im HF-Feld nicht erwärmenden Umhüllung versehen wird und daß diese Umhüllung nach dem Durchlaufen des Wirbelbades zumindest aus dem unmittelbar an das Bauelement angrenzenden Bereich wieder entfernt wird./bevor die Wirbelsinterschicht endgültig hart wird. Dies erfolgt vorteilhaft,

Die wärmeisolierende Umhüllung kann vorteilhaft durch Greifer erfolgen, welche die Bauelemente durch das Wirbelbad führen. Sofern die Bauelemente anschließend gegurtet vorliegen sollen, ist es vorteilhaft, wenn die wärmeisolierende Umhüllung durch Klebestreifen erfolgt, welche die Bauelemente durch das Wirbelbad führen. Diese Streifen können dann anschließend als Gurtung dienen. Hierzu werden sie vorteilhaft nach dem Durchlaufen des Wirbelbades von anhanftendem Kunststoffstaub gereinigt, beispielsweise durch Absaugen oder Abbürsten des Staubes. Die Klebefolien können aus Kunststoffolien oder aus Papier mit einer Kleberschicht bestehen.

Eine einfache Ausführungsform des Verfahrens für den Serienbetrieb ist dadurch gegeben, daß die Anschlußdrähte der Bauelemente zunächst in die Umhüllungen mit leicht zu beherrschenden Toleranzen ihrer Lage in der Umhüllung eingebracht und dann in die Umhüllungen eingedrückt werden, bis die Umhüllungen das Bauelement berühren. Ebenfalls vorteilhaft ist es, daß die Anschlußdrähte der Bauelemente zwischen zwei Klebestreifen eingeklebt werden, daß dabei die dem Bauelement zugewandten Ränder der Klebestreifen nach außen abgebogen werden, daß diese abgebogenen Teile der Klebestreifen nach dem Einkleben gegen die Anschlußdrähte gedrückt werden und daß dadurch eine Abdeckung bis zum Bauelement hin hergestellt wird. Diese Ausführungsform ist bei stark klebenden Klebestreifen vorteilhaft, welche beispielsweise bei relativ großen Bauelementen erforderlich sind, um diese einwandfrei zu halten.

Der Erfindung liegt die Erkenntnis zugrunde, daß die Anschlußdrähte im Hochfrequenz-Feld nur relativ wenig Wärme aufnehmen, so daß ein Klebestreifen oder eine einfache Halterung ausreicht, um den Niederschlag von Kunststoffpulver auf den Anschlußdrähten zu vermeiden. Die Erwärmung ist auch so gering, daß eine Zerstörung der klebenden Eigenschaften der bekannten Klebestreifen nicht erfolgt.

Soll eine glatte Oberfläche des Bauelementes erreicht werden, so ist es vorteilhaft, wenn die Anschlußdrähte der Bauelemente nach dem Durchlaufen des Wirbelbades und vor dem Glattschmelzen gegenüber der Umhüllung um einen kleinen Betrag angehoben werden. In diesem Falle fließt beim Glattschmelzen der Kunststoff im Bereich der Umhüllung der Anschlußdrähte zusammen, da diese Umhüllung das Bauelement nicht mehr berührt, so daß eine einwandfreie, glatte und durchgehende Kunststoffschicht entsteht. Sollen dagegen Abstandsfüßchen erhalten werden, so ist es vorteilhaft, wenn ein aushärtendes Gießharz verwendet wird und wenn die Anschlußdrähte nach dem Durchlaufen des Wirbelbades, nach dem Glattschmelzen und während des Gelierens des Gießharzes gegenüber der Umhüllung der Anschlußdrähte um einen kleinen Betrag angehoben werden. Zu diesem Zeitpunkt findet kein Verfließen des Kunstharzes mehr statt, allenfalls tritt noch eine Kantenverrundung ein. Dagegen lassen sich die Abdeckungen noch unschwer aus dem Kunstharz herausziehen. Das vollständige Aushärten des Überzuges kann in diesem Fall außerhalb der Umhüllvorrichtung erfolgen. Die Kondensatoren können hierzu als Schüttgut aufbewahrt werden.

Die vorliegende Erfindung wird nun anhand von Figuren näher erläutert. Sie ist nicht auf die in den Figuren gezeigten Beispiele beschränkt.

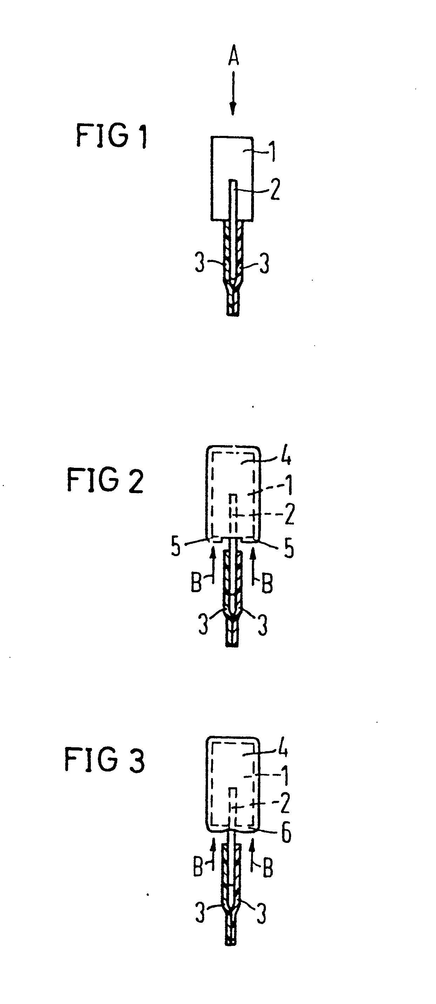

Fig. 1 zeigt ein Bauelement mit umhüllten Anschlußdrähten, die

Fig. 2 und 3 zeigen das umhüllte Bauelement mit zwei verschiedenen Ausführungsformen der Umhüllung.

Ein Bauelement 1 besitzt Anschlußdrähte 2. Diese Anschlußdrähte 2 sind zwischen zwei Klebefolien 3 eingebracht. Das Bauelement 1 wurde in Pfeilrichtung A gegen die Klebefolien gedrückt, bis die Anschlußdrähte 2 so weit zwischen die Klebefolien 3 eingedrückt wurden, daß die Klebefolien 3 am Bauelement 1 anliegen. In diesem Zustand wird das Bauelement 1 durch ein nicht dargestelltes Wirbelbad geführt und dort mit einer Kunststoffschicht 4 überzogen. Diese Kunststoffschicht 4 besteht aus einem aushärtbaren Kunststoff. Dieser wird nach dem Verlassen des Wirbelbades glattgeschmolzen. Beim Gelieren des Kunststoffes wird das Bauelement 1 in der Pfeilrichtung B gegenüber den Kleberändern 3 angehoben. In diesem Zustand wird das Kunstharz 4 ausgehärtet, wobei es die dargestellte Form im wesentlichen behält. So erhält das umhüllte Bauelement Abstandsfüße 5. Das vollständige Aushärten des Kunstharzes kann außerhalb der Wirbelsintervorrichtung erfolgen. Dabei kann das Bauelement zwischen den Klebebändern 3 gehalten bleiben. Diese können als Gurtung verwendet werden. Bauelemente 3 können aber auch vereinzelt und als Schüttgut ausgehärtet werden.

Eine vollständige Kunststoffumhüllung 6 wird vorteilhaft dadurch erreicht, daß nach dem Wirbelsintern und vor dem Glätten das Bauelement 1 in Pfeilrichtung B gegenüber den Klebebändern 3 etwas angehoben wird. Bei dieser Ausführung verläuft beim Glätten des Kunststoffüberzugs der Kunststoff und umschließt die Anschlußdrähte 2, so daß sich eine gleichmäßige Umhüllung 6 des Bauelements ausbildet. Bei dieser Ausführungsform können auch vorteilhaft anstelle der Klebebänder Halteklammern verwendet werden, da beim Glattschmelzen keine Berührung zwischen dem Kunststoff und den Halteklammern mehr besteht. So besteht keine Gefahr, daß der Kunststoff an den wieder zu verwendenden Halteklammern anklebt. Hier eignen sich neben aushärtbaren auch thermoplastische Kunststoffe.

8 Patentansprüche
3 Figuren

- 1 -    VPA    78 P 1 1 1 8 EUR

Patentansprüche

1. Verfahren zum Umhüllen von elektrischen Bauelementen, insbesondere elektrischen Kondensatoren, durch Wirbelsintern, bei dem die Metallteile der elektrischen Bauelemente durch ein Hochfrequenz-Feld erwärmt werden, während die Bauelemente in einem Wirbelbad durch aufgewirbeltes Kunststoffpulver geführt werden, bei dem nach dem Durchlaufen des Wirbelbades lose anhaftender Kunststoffstaub entfernt wird und bei dem der angeschmolzene Kunststoff durch einen weiteren Schmelzvorgang geglättet wird, d a d u r c h g e k e n n z e i c h n e t , daß die Anschlußdrähte (2) vor dem Eintritt in das Wirbelbad zumindest in ihrem am Bauelement (1) angrenzenden Teil mit einer wärmeisolierenden und sich im HF-Feld nicht erwärmenden Umhüllung (3) versehen werden und daß diese Umhüllung (3) nach dem Durchlaufen des Wirbelbades zumindest aus dem unmittelbar an die Bauelemente (1) angrenzenden Bereich wieder entfernt wird, ~~bevor die Wirbelsinterschicht endgültig hart wird.~~

2. Verfahren nach Anspruch 1, d a d u r c h g e k e n n z e i c h n e t , daß die wärmeisolierende Umhüllung durch Greifer erfolgt, welche die Bauelemente durch das Wirbelbad führen.

3. Verfahren nach Anspruch 1, d a d u r c h g e k e n n z e i c h n e t , daß die wärmeisolierende Umhüllung durch Klebestreifen erfolgt, welche die Bauelemente durch das Wirbelbad führen.

4. Verfahren nach einem der Ansprüche 1 bis 3, d a d u r c h g e k e n n z e i c h n e t , daß die Anschlußdrähte der Bauelemente in die Umhüllungen mit Licht zu beherrschenden Toleranzen ihrer Lage in den Umhüllungen eingebracht und dann in die Umhüllungen eingedrückt werden, bis die Umhüllungen das Bauelement berühren.

5. Verfahren nach Anspruch 3, d a d u r c h g e k e n n z e i c h n e t , daß die Anschlußdrähte der Bauelemente zwischen zwei Klebestreifen eingeklebt werden, daß dabei die dem Bauelement zugewandten Ränder der Klebestreifen nach außen abgebogen werden, daß diese abgebogenen Teile der Klebestreifen nach dem Einkleben gegen die Anschlußdrähte gedrückt werden und daß dadurch eine Abdeckung bis zum Bauelement hin hergestellt wird.

6. Verfahren nach einem der Ansprüche 1 bis 5, d a d u r c h g e k e n n z e i c h n e t , daß die Anschlußdrähte der Bauelemente nach dem Durchlaufen des Wirbelbades und vor dem Glattschmelzen gegenüber der Umhüllung um einen kleinen Betrag angehoben werden.

7. Verfahren nach einem der Ansprüche 1 bis 5, d a d u r c h g e k e n n z e i c h n e t , daß ein aushärtendes Gießharz verwendet wird und daß die Anschlußdrähte nach dem Durchlaufen des Wirbelbades, nach dem Glattschmelzen und während des Gelierens des Gießharzes gegenüber der Umhüllung der Anschlußdrähte um einen kleinen Betrag angehoben werden.

8. Verfahren nach Anspruch 1 oder 7, d a d u r c h
g e k e n n z e i c h n e t , daß die Umhüllung aus
dem unmittelbar an die Bauelemente angrenzenden Bereich entfernt wird, bevor die Wirbelsinterschicht
endgültig hart wird.

A

FIG 1

1
2
3   3

FIG 2

4
1
2
5   5
B   B
3   3

FIG 3

4
1
2
6
B   B
3   3

# EUROPÄISCHER RECHERCHENBERICHT

Europäisches Patentamt

Nummer der Anmeldung

Er 79 10 ....

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 553 363 (MALLORY & CO) <br> * Seite 5, Zeilen 17-30; Ansprücne Bild 1 * | 1 |
| A | US - A - 3 967 000 (MALLORY & CO) <br> * Ansprüche; Figur 1 * | 1 |

**KLASSIFIKATION DER ANMELDUNG (Int.Cl. 3)**

H 01 G 17/10

**RECHERCHIERTE SACHGEBIETE (Int. Cl. 3)**

H 01 G 17/10
9/08
9/05

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-10-1979 | VAN KERTH |